# FASCICULE DE BREVET EUROPEEN

(11) **EP 0 803 110 B1**
(45) Date de publication et mention de la délivrance du brevet: **03.02.1999**
(21) Numéro de dépôt: 95934694.1
(22) Date de dépôt: 12.10.1995
(51) Int. Cl.: G07F 17/30, G11B 27/00

(54) **SYSTEME DE DISTRIBUTION AUDIOVISUELLE**
AUDIOVISUELLES VERTEILUNGSSYSTEM
AUDIOVISUAL DISTRIBUTION SYSTEM

(30) Priorité: 12.10.1994 WO PCT/FR94/01185
(43) Date de publication de la demande: 29.10.1997
(73) Titulaire: TECHNICAL MAINTENANCE CORPORATION, Las Vegas, NV 89104 (US)
(72) Inventeur: NATHAN, Guy, F-91330 Yerres (FR); MASTRONARDI, Tony, Pierrefonds, Québec H8Y 3L2 (CA)
(74) Mandataire: Debay, Yves
(86) Numéro de dépôt international: FR9501337
(87) Numéro de publication internationale: WO9612260

(56) Documents cités:
- EP-A- 0 283 350
- WO-A-93/18465
- WO-A-94/03894

## Description

La présente invention concerne un système de distribution audiovisuelle pour exécuter une pièce audiovisuelle sur au moins un appareil audiovisuel parmi une pluralité d'appareils audiovisuels reliés en réseau à un serveur central.

Il est connu des réseaux permettant de délivrer de la musique à partir d'un appareil de type juke-box en multiplexant en fréquence une sélection musicale sur un réseau câblé de type câble coaxial servant à la distribution de canaux de télévision. Un tel dispositif est connu notamment par le brevet EP 0140593. Il présente l'inconvénient de nécessiter des boites de conversion pour démultiplexer les signaux, d'utiliser un réseau de type coaxial impliquant pour un canal la distribution de la même sélection sur tous les postes.

Un premier but de l'invention est de permettre au réseau de distribuer au choix soit la même sélection sur tous les appareils, soit sur chaque appareil une sélection différente cette sélection pouvant être aussi bien de type audio que de type vidéo.

Il est également connu, comme par le brevet britannique 2193420 et par le brevet PCT WO 9415416, des réseaux de distribution de sélection audio nécessitant des lignes téléphoniques. Du fait de l'utilisation de ces lignes téléphoniques les débits au réseau sont limités et un tel réseau ne peut être utilisé à la distribution de sélection vidéo nécessitant un grand débit d'informations pour permettre des reproductions de vidéo de bonne qualité.

Le brevet PCT WO 9415416 enseigne l'utilisation d'une ligne téléphonique du type ISDN mais même ce type de ligne dont le débit est limité à 18 mégabit/seconde n'est pas suffisant pour distribuer des informations vidéo de qualité sur un nombre suffisant d'appareils.

Enfin l'invention a également pour but de proposer un réseau dans lequel les éléments coûteux sont déportés au niveau du serveur pour réduire le coût de chaque appareil de reproduction audiovisuelle sans pénaliser pour autant les performances de chacun. De tels éléments coûteux sont les disques durs de haute capacité permettant le stockage d'un nombre suffisant de sélections d'informations, notamment vidéo, ainsi que les modems de télécommunication ayant des débits permettant la liaison du réseau avec un système central desservant une pluralité de réseaux.

Ce but est atteint par le fait que le système de distribution audiovisuelle pour exécuter une pièce audiovisuelle sur au moins un appareil audiovisuel parmi une pluralité d'appareils audiovisuels comportant chacun des moyens audio ou vidéo d'exécution d'une pièce et reliés à un serveur central informatique contenant des moyens à mémoire magnétique ou optique de mémorisation de masse d'une pluralité de pièces audiovisuelles sélectionnables à partir de chacun des appareils, est caractérisé en ce que chacun des appareils audiovisuels (8) comporte des moyens interactifs de communication avec l'utilisateur pour sélectionner une pièce ou un menu, des moyens de paiement, une carte réseau informatique, une mémoire permanente à semi-conducteur contenant un système d'exploitation multitâches comportant au moins une tâche de gestion des accès disque dur dans laquelle l'ordre d'exécution d'une pièce résultant d'une sélection est traité d'une part, comme une tâche d'accès séquentiel disque dur, et d'autre part la carte réseau de l'appareil est déclarée au système d'exploitation comme la périphérique constituant le disque dur de l'appareil, pour permettre d'envoyer à travers le réseau une requête au serveur (9) en vue de son traitement, le serveur comportant un système d'exploitation multitâches, une mémoire de masse permanente de type magnétique ou optique, une carte réseau par laquelle les requêtes des différents appareils (8) sont reçues, le système d'exploitation traitant ces requêtes d'accès disque produites par les appareils comme des propres requêtes d'accès disque.

Selon une autre particularité, dans le système d'exploitation de chaque appareil audiovisuel la déclaration du modem de télécommunication appartenant à une tâche d'accès télécommunication en tant que périphérique correspond à celle de la carte réseau et lorsqu'une requête d'accès télécommunication est effectuée au niveau d'un appareil la carte réseau de cet appareil transmet cette requête au serveur qui lui comporte au moins un modem de télécommunication.

Selon une autre particularité, l'appareil audiovisuel s'assure préalablement par une requête que la carte modem du serveur est disponible.

Selon une autre particularité le débit de chaque carte réseau et les tampons des circuits de commande vidéo et son sont dimensionnés pour permettre l'échange des informations avec un débit suffisant pour réaliser l'animation vidéo sur un réseau contenant au moins huit appareils audiovisuels.

Selon une autre particularité, chaque appareil audiovisuel comporte un écran tactile et son logiciel d'interface associé comme moyen interactif de communication avec l'utilisateur.

Selon une autre particularité, le réseau comprend un nombre de serveurs, associé chacun à un disque dur, et un nombre d'appareils audiovisuels tel que le nombre d'appareils audiovisuels est égal à huit fois le nombre de serveurs.

Selon une autre particularité, le système d'exploitation de chaque serveur est associé avec un moyen de commutation permettant de décider si les informations fournies en réponse à la requête d'un appareil du réseau sont desservies à l'ensemble des appareils du réseau ou à chaque appareil ayant émis une requête.

Selon une autre particularité, le serveur est équipé de moyens d'exécution audio ou vidéo d'une pièce, d'un moyen de paiement et d'un moyen interactif de communication avec un utilisateur où le gérant du réseau.

D'autres avantages et particularités de l'invention apparaîtront à la lecture de la description suivante, faite en référence aux dessins annexés, donnés à titre d'exemple illustratif mais non limitatif d'une réalisation de l'invention, dans lesquels :
La figure 1 représente schématiquement un réseau selon l'invention ;
La figure 2 représente le schéma des circuits constituant un appareil audiovisuel du réseau ;
La figure 3 représente le schéma des circuits constituant un serveur du réseau ;
La figure 4 représente l'organisation du système multitâches gérant les moyens matériel et logiciel de chacun des appareils ou serveurs du réseau ;
La figure 5 représente un logigramme de description du fonctionnement du système d'exploitation multitâches ;
La figure 6 représente le logigramme de vérification des activités des tâches à l'intérieur du système multitâches ;
La figure 7 représente le logigramme de mise en file d'attente des tâches.

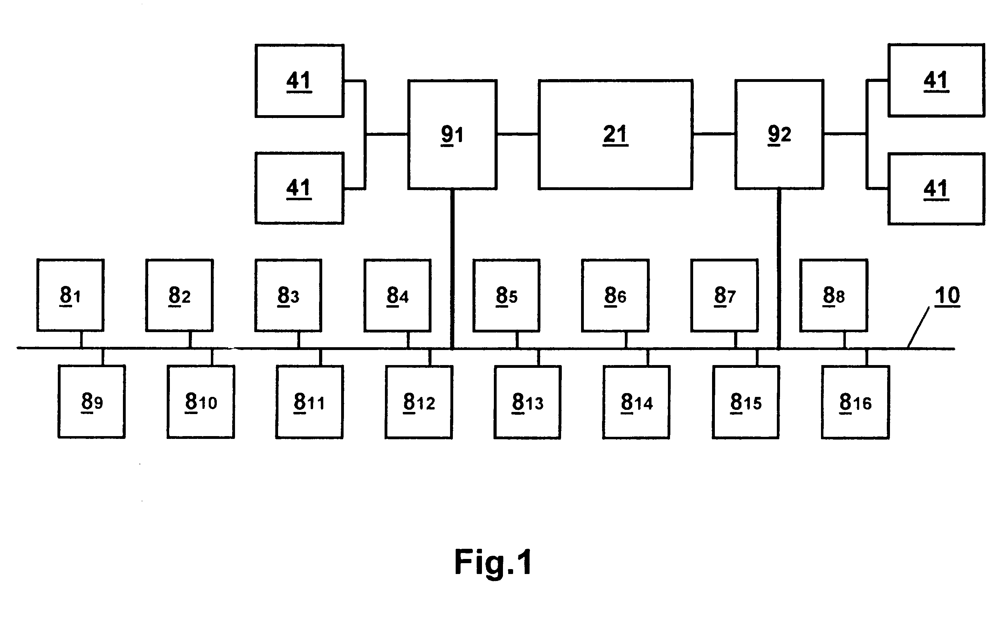

De préférence, mais cependant de manière non limitative, le système de reproduction audiovisuelle utilise les éléments matériels énumérés et référencés ci-après en liaison avec la figure 1.

Le système est constitué d'une pluralité d'appareils audiovisuels (8₁, 8₂, 8ᵢ, 8₁₆).reliés entre eux et par un réseau informatique à au moins un serveur (9₁, 9₂).

Il y a deux types de serveurs (9₁, 9₂) qui peuvent être reliés au réseau local (10), les serveurs maîtres (9₁) et les serveurs miroirs (9₂). Les serveurs maîtres ((9₁) sont ceux qui sont activement impliqués sur le réseau local. Ce sont eux qui reçoivent les requêtes des juke-boxes (8) et qui font le travail.

Le travail des serveurs miroirs (9₂) est de cloner les serveurs maîtres (9₁). Ils se doivent d'être synchronisés à la perfection avec leurs maîtres et ce pour tout changement. Quand ils détectent que le serveur maître (9₁) ne répond plus aux demandes des juke-boxes (8), ils se doivent de placer des appels de détresse aux administrateurs du réseau pour prendre la relève jusqu'à ce que ceux-ci fonctionnent normalement à nouveau.

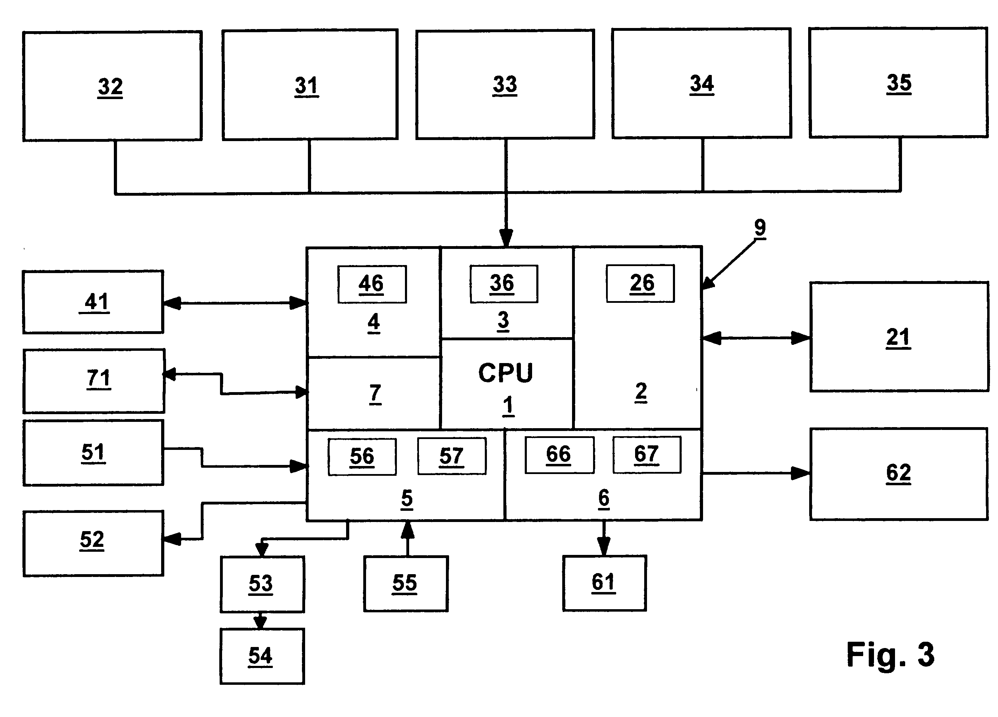

Chaque serveur (9₁, 9₂)est constitué d'une unité centrale (1, figure 3) à microprocesseur qui est, par exemple, un système compatible PC de haute performance. Le choix, lors de la mise en oeuvre, s'est porté sur un système du type Intel 80486 DX/2 qui possède des moyens de mémorisation et les caractéristiques suivantes:
- compatibilité avec le bus local Vesa,
- antémémoire du processeur: 256 kO,
- carte (71) réseau 100 Mbits
- ports série et parallèle de haute performance,
- contrôleur de bus type SCSI/2WIDE 32 bits,
- mémoire vive RAM statique auto-alimentée de 32 MO.

Le système d'exploitation des cartes réseau doit être un serveur de réseau local tel que NOVELL, OS/2 LAN SERVER, UNIX ou tout autre système d'exploitation similaire.

Ce logiciel de serveur de réseau permet l'accès, l'échange et le partage de données et ressources d'équipements de manière ordonnée en appliquant des priorités et des règles d'accès à chacun des clients connectés au réseau local.

Toute autre unité centrale possédant des performances équivalentes ou supérieures pourra être utilisée dans l'invention.

L'unité centrale (1, figure 3) du serveur commande et gère un circuit de commande du réseau (7), un circuit (4) de commande des télécommunications, un circuit (3) de commande des entrées, un circuit (2) de commande de la mémorisation de masse. Dans le cas où le serveur (9)doit fonctionner comme un juke-box, il est possible d'ajouter un circuit de commande du son (5) et un circuit (6) de commande des moyens de visualisation du même type que ceux des appareils (8). Les moyens de visualisation se composent principalement d'un moniteur vidéo (62) à écran plat de 14 pouces (35,56 cm) sans entrelacement de type SVGA à haute résolution et faible rayonnement, c'est ce moniteur qui est utilisé pour la reproduction d'images (par exemple les couvertures d'albums des sélections musicales), de graphiques ou de clips vidéo.

Le serveur (9) utilise à des fins de maintenance un clavier externe (34) qui peut être relié au serveur qui possède pour cela un connecteur de clavier, contrôlé par le circuit d'interface (3).

Des moyens de mémorisation de masse (21) utilisant des disques durs de type SCSI haute vitesse et haute capacité, sont associés aux moyens de mémorisation déjà présents dans le dispositif à microprocesseur du serveur (9). Ces moyens servent au stockage d'informations audiovisuelles numérisées et compressées.

Un circuit modem de télécommunications (41) haute vitesse d'au moins 28,8 Kbps est intégré au serveur (9) pour autoriser la liaison avec un réseau de distribution d'informations audiovisuelles contrôlé par un système central desservant plusieurs serveurs.

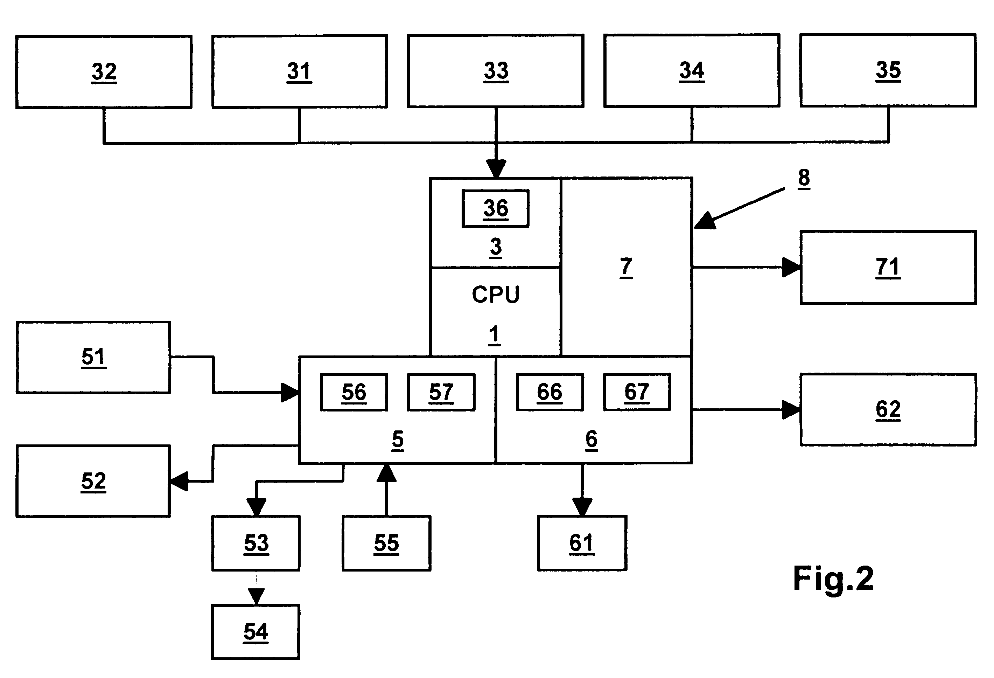

Chaque appareil audiovisuel (8) comporte une unité centrale (1, figure 2) à microprocesseur qui est, par exemple, un système compatible PC de haute performance.

Le choix, lors de la mise en oeuvre, s'est porté sur un système du type Intel 80486 DX/2 qui possède des moyens de mémorisation et les caractéristiques suivantes:
- compatibilité avec le bus local Vesa,
- antémémoire du processeur: 256 kO,
- carte (71) réseau de 100 Mbits
- mémoire vive statique auto-alimentée RAM de 32 MO
- ports série et parallèle de haute performance,

Toute autre unité centrale possédant des performances équivalentes ou supérieures pourra être utilisée dans l'invention.

Cette unité centrale commande et gère un circuit de commande son (5), un circuit (3) de commande des entrées, un circuit (7) de commande du réseau informatique, un circuit (6) de commande des moyens de visualisation. Les moyens de visualisation se composent principalement d'un moniteur vidéo (62) à écran plat de 14 ou 15 pouces (35,56 cm) sans entrelacement de type SVGA à haute résolution et faible rayonnement, c'est ce moniteur qui est utilisé pour la reproduction d'images (par exemple les couvertures d'albums des sélections musicales), de graphiques ou de clips vidéo.

Pour la reproduction des informations sonores des sélections musicales, les appareils et éventuellement le ou les serveurs comportent des haut-parleurs (54) recevant le signal d'un amplificateur -tuner (53) relié au circuit électronique (5) de type synthétiseur de musique prévu pour supporter un grand nombre de sources d'entrée tout en fournissant une sortie présentant une qualité de type CD (disque compact), telle que par exemple l'adaptateur audio multimédia à microprocesseur, du type carte "Sound Blaster" SBP32AWE de chez Creative Labs Inc sur lequel deux tampons mémoire (56, 57) sont ajoutés dans le but explicité ultérieurement. Ce circuit (5) a pour rôle de décompresser les informations digitales arrivant par le réseau.

De même le circuit de commande des moyens de visualisation comporte également deux mémoires tampon (66, 67) dans le but explicité ultérieurement.

Une alimentation thermiquement régulée de 240 watts ventilée fournit l'énergie à chaque appareil ou serveur. Cette alimentation est protégée contre les surintensités et les suroscillations.

Chaque appareil audiovisuel (8) et éventuellement le ou les serveurs (9) gèrent, par le biais du circuit contrôleur d'entrée (3), un écran tactile (33) "Intelli Touch" de 14 pouces (35,56 cm) de chez Elo Touch Systems Inc,.qui inclut un panneau de revêtement de la vitre utilisant la "technologie avancée d'onde de surface" ainsi qu'un contrôleur de bus de type AT. Cet écran tactile permet après avoir affiché sur le moniteur vidéo (62) ou l'écran d'un téléviseur (61) diverses informations de sélection utilisées par les clients, ainsi que des informations de commandes et de contrôle de gestion utilisées par le gérant ou le propriétaire du système. Il peut être également utilisé sur chaque appareil (8) à des fins de maintenance en combinaison avec un clavier externe (34) qui peut être relié à l'appareil possédant pour cela un connecteur de clavier, contrôlé par un verrou à clé (32) à travers le circuit d'interface (3).

Le circuit d'entrée (3) d'au moins un des appareils (8) du réseau peut également interfacer avec un ensemble télécommande (31) constitué, par exemple:
- d'une télécommande infrarouge de chez Mind Path Technologies Inc., émetteur qui possède 15 touches de commande pour le système à microprocesseur et 8 touches de commande pour dispositif de projection.
- d'un récepteur infrarouge avec adaptateur série de chez Mind Path Technologies Inc.

Chaque appareil de réseau est équipé d'un dispositif de paiement de redevances (35) de chez National Rejectors Inc., est également relié au circuit d'interface d'entrée (3). Il est également possible d'utiliser tout autre dispositif qui permette la réception de tout mode de paiement par pièces, billets, jetons, cartes magnétiques à puces ou combinaison des moyens de paiement

Pour loger les circuits, il est de plus prévu pour chaque appareil un châssis ou bâti avec garnitures extérieures personnalisables.

Outre ces éléments, un microphone (55) avec ou sans fil peut être relié au contrôleur de son (5) de chaque appareil, ce qui permet de transformer ce dernier en un puissant système d'annonces et d'informations destinées au public ou éventuellement en machine de karaoké. De même un système de haut-parleurs sans fil peut être utilisé par le système.

L'ensemble (31) de commande à distance permet au gérant, d'accéder et de contrôler à distance différentes commandes telles que:
- la commande marche/arrêt du microphone,
- la commande de mise en sourdine des haut-parleurs,
- la commande de contrôle de volume sonore,
- la commande d'annulation de la sélection musicale en train d'être écoutée.

Deux tampons (56, 57) sont associés à chaque circuit contrôleur de son (5) pour permettre de mémoriser chacun de façon alternative une information correspondant à un quart de seconde de son. De même deux tampons (66, 67) sont associés à chaque circuit contrôleur de vidéo (6) capables chacun et alternativement de mémoriser un dixième de seconde d'images. Enfin un tampon (36) d'interface d'entrée est associé à chaque interface d'entrée (3) de chaque appareil (8) ou serveur (9).

Le logiciel d'exploitation de chaque appareil (8) ou serveur (9) du système a été élaboré autour d'une librairie d'outils et de services très largement orientée vers le domaine audiovisuel dans un univers multimédia. Cette librairie inclut de manière avantageuse un système d'exploitation multitâche performant qui autorise efficacement l'exécution simultanée de multiples fragments de code. Ce logiciel d'exploitation permet ainsi les exécutions concurrentes, de manière ordonnée et en évitant tout conflit, d'opérations réalisées sur les moyens de visualisation, les moyens de reproduction sonores de même que la gestion des liaisons de télécommunications au travers du réseau de distribution. De plus, ce logiciel présente une grande flexibilité

Les données audiovisuelles numérisées et compressées sont stockées dans les moyens de mémorisation (21) du serveur (9).

Chaque sélection est disponible selon deux formats numérisés: avec une qualité hi-fi ou une qualité CD.

Le logiciel d'exploitation de chaque appareil (8) est placé dans la mémoire vive RAM statique autoalimentée de chaque appareil (8) alors que le logiciel d'exploitation du serveur (9) peut être sauvegardé dans le disque dur (21) et chargé pour exploitation dans la mémoire vive du serveur

Il est essentiel de noter que les tâches spécifiques des modules constituant le système d'exploitation sont exécutées simultanément dans un environnement utilisant le système d'exploitation multitâche. Par conséquent, les organigrammes indiquent des opérations spécifiques qu'un module doit effectuer et non un branchement vers ce module qui invaliderait toutes les opérations effectuées par les autres modules.

Le premier module, référencé SSM, est le module de démarrage. Ce module ne fournit qu'un seul service, par conséquent il se charge automatiquement au moment de la mise sous tension de l'appareil ou serveur et rentre alors directement dans le mode "en service" du module référencé RMM.

Le module RMM est le module du mode "en service", qui est le mode de fonctionnement dans lequel l'appareil ou serveur entre dès que son numéro d'enregistrement est validé. Dans ce mode, l'appareil (8) ou serveur (9) sont prêts pour manipuler toute requête qui peuvent être déclenchée par différents événements prédéfinis, comme par exemple:
- des utilisateurs qui touchent l'écran d'un appareil (8) transférant le contrôle de session de premier plan au module CBSM du mode de sélection et d'exploration client,
- des requêtes d'appel de télécommunications par le module de services télécom TSM,

L'appareil (8) ou le serveur (9) restent dans le mode "en service" jusqu'à ce que l'un des événements décrits ci-avant se produise.

Le module CBSM est le module de mode de sélection et d'exploration client. L'accès à ce module est déclenché à partir du mode "en service" lorsque le client touche l'écran. L'affichage permet à l'usager de visualiser un menu prévu pour une exploration puissante assistée par des messages vocaux numérisés pour le guider dans son choix de sélections musicales.

Le module TSM est le module de mode de services de télécommunications entre le serveur du réseau et un système central desservant plusieurs serveurs appartenant à des réseaux différents. Ce module permet de gérer tous les services de gestion disponibles sur le réseau de distribution. Toutes les tâches propres aux télécommunications sont gérées comme des tâches d'arrière-plan. Ces tâches n'utilisent toujours que les parties de temps de traitement restant une fois que l'appareil ou serveur a achevé toutes ses tâches de premier plan. Ainsi, lorsque l'appareil est occupé avec l'une de ses tâches de plus haute priorité, les tâches de télécommunications, automatiquement, vont s'efforcer de diminuer les contraintes sur les ressources du système et récupérer tout temps de traitement du microprocesseur laissé disponible.

Le module SPMM permet la gestion des sélections de musiques chansons ou vidéo mises en file d'attente par le système en vue de leur exécution dans l'ordre de sélection.

Le système d'exploitation multitâches constitue l'élément essentiel pour permettre l'exécution simultanée de multiples fragments de codes et pour gérer les priorités entre les différentes tâches qui se réveillent

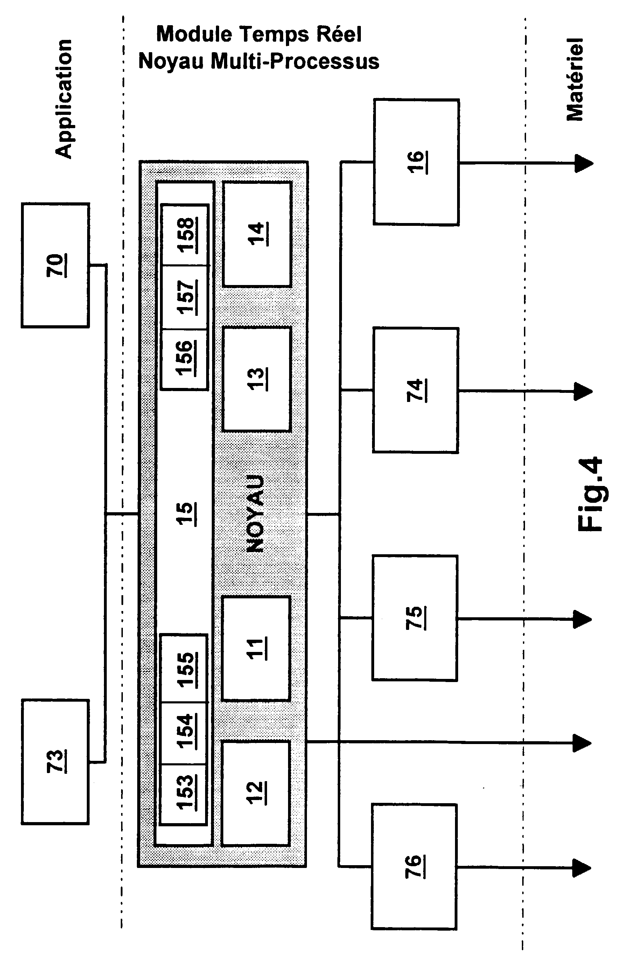

Ce système d'exploitation multitâche est organisé, comme représenté à la figure 4, autour d'un noyau comportant un module (11) de résolution des priorités entre tâches, d'un module (12) superviseur des tâches, d'un module (13) de sérialisation du matériel utilisé et un module (14) de communication des processus. Chacun des modules communique avec des interfaces (15) de programmation des applications et la base de donnée (16). Il y a autant d'interface de programmation qu'il y a d'applications. Ainsi le module (15) comporte une première interface (153) de programmation pour l'écran tactile (33), une deuxième interface (154) de programmation pour le clavier (34) une troisième interface (155) de programmation pour le dispositif de paiement (35), une quatrième interface (156) de programmation pour le circuit de contrôle du son (5), une cinquième interface (157) de programmation pour le circuit (6) de contrôle de la vidéo et une dernière interface (158) pour le circuit (7) de contrôle du réseau informatique.

Il est importer de noter que l'interface de programmation de la carte réseau est fournie avec la carte lorsque l'on achète un kit réseau et que la carte réseau est déclarée au système d'exploitation comme le périphérique constituant le disque dur ou la carte modem, télécommunication de chaque appareil audiovisuel (8). Ainsi chaque système d'exploitation de chaque appareil (8), suite à l'appel d'une procédure télécommunication ou d'accès disque dur consécutif à une sélection déclenche une session de communication réseau dans laquelle la carte réseau du serveur mettra à disposition de chaque appareil audiovisuel (8) la ressource appelée.

Cinq tâches ayant un ordre de priorité décroissant sont gérées par le noyau (kernel) du système d'exploitation, la première (76) pour les entrées sorties vidéo a la priorité la plus élevée, la deuxième (75) de niveau deux concerne le son, la troisième (74) de niveau trois les télécommunications, la quatrième (73) de niveau quatre les interfaces et la cinquième (70) de niveau cinq la gestion. Ces ordres de priorités seront pris en compte par le module (11) de résolution des priorités au fur et à mesure de l'apparition ou de la disparition d'une tâche. Ainsi dès qu'une tâche vidéo apparaît, les autres tâches en cours d'exécution sont suspendues, la priorité est donnée à cette tâche et toutes les ressources sont allouées à la tâche vidéo. La tâche vidéo (76) en sortie a pour objet de décharger les fichiers vidéo de la mémoire de masse (21) alternativement vers l'un des deux tampons (66, 67) de l'appareil (8) ayant formulé la requête tandis que l'autre tampon (67, respectivement 66) est utilisé par le circuit (6) contrôleur de vidéo de l'appareil (8) ayant formulé la requête pour produire l'affichage après décompression des données. En entrée la tâche vidéo (76) du serveur (9) a pour objet de transférer les données reçues dans le tampon de télécommunication (46) du serveur (9) vers la mémoire de masse (21) du serveur (9). Il en est de même pour la tâche son (75), d'une part en entrée entre le tampon de télécommunication (46) et le tampon (26) de la mémoire de masse (21)et d'autre part en sortie entre le tampon (26) de la mémoire de masse (21) du serveur (9) et l'un des deux tampons (56, 57) du circuit (5) contrôleur de son de l'appareil (8) ayant formulé la requête.

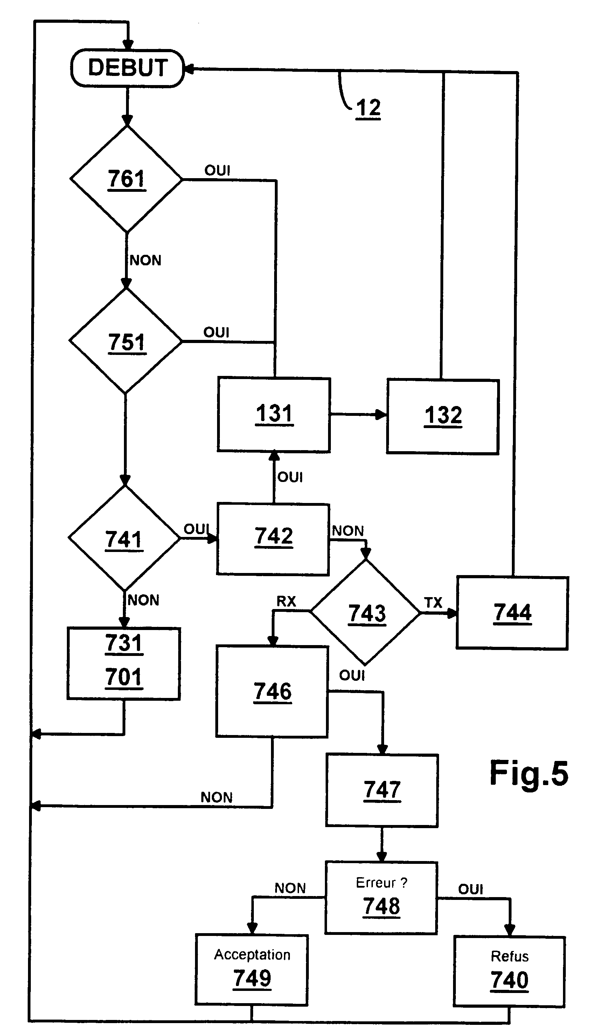

Le module superviseur de tâche (12) de chaque appareil (8) ou serveur (9) va maintenant être décrit en liaison avec la figure 5. Ce module effectue dans l'ordre de priorité un premier test (761) pour déterminer si la tâche vidéo est active, c'est à dire si un des tampons vidéo (66, 67) est vide. Dans le cas où la réponse est négative le module superviseur de tâche passe au test suivant qui est un second test (751) pour déterminer si la tâche son est active, c'est à dire si un des tampons (56, 57) est vide. En cas de réponse négative un troisième test (741) détermine si la tâche communication est active, c'est à dire si le tampon (46) est vide. Après une réponse affirmative à l'un des test, le module superviseur de tâche (12) remplit à l'étape (131) la file de requête (13) d'accès mémoires et exécute à l'étape (132) cette requête en lecture ou en écriture entre la mémoire de masse (21) dus serveur (9) et le tampon correspondant à la tâche active de l'appareil (8), puis reboucle sur le premier test. Lorsque le test (741) sur l'activité d'une communication est affirmatif le superviseur (12) effectue un test (742) pour déterminer s'il s'agit de lire ou d'écrire de l'information en mémoire. Si oui la requête d'écriture ou de lecture est mise dans la file à l'étape (131). Dans le cas contraire le superviseur détermine à l'étape (743) s'il s'agit d'une transmission ou d'une réception et dans le cas d'une transmission envoie, par une procédure de communication réseau, à l'étape (744) le bloc d'information au serveur(9) pour transmission par ce dernier au système central desservant plusieurs serveurs. Dans le cas d'une réception, le superviseur vérifie à l'étape (746) que les tampons du serveur sont libres d'accès et dans l'affirmative envoie un message au serveur central pour accepter la réception d'un bloc de donnée à l'étape (747). Après la réception d'un bloc, un contrôle d'erreur (748) est effectué du type de redondance cyclique CRC (cyclic redundant check). Le bloc est refusé à l'étape (740) en cas d'erreur, ou accepté dans le cas contraire à l'étape (749), par l'envoi d'un message correspondant au système central signifiant que le bloc portant un numéro déterminé est refusé ou accepté, puis reboucle sur les tests de départ. dans le cas ou aucune tâche de niveau supérieur est active le superviseur effectue à l'étape (731 ou 701) le traitement des tâches d'interface ou de gestion.

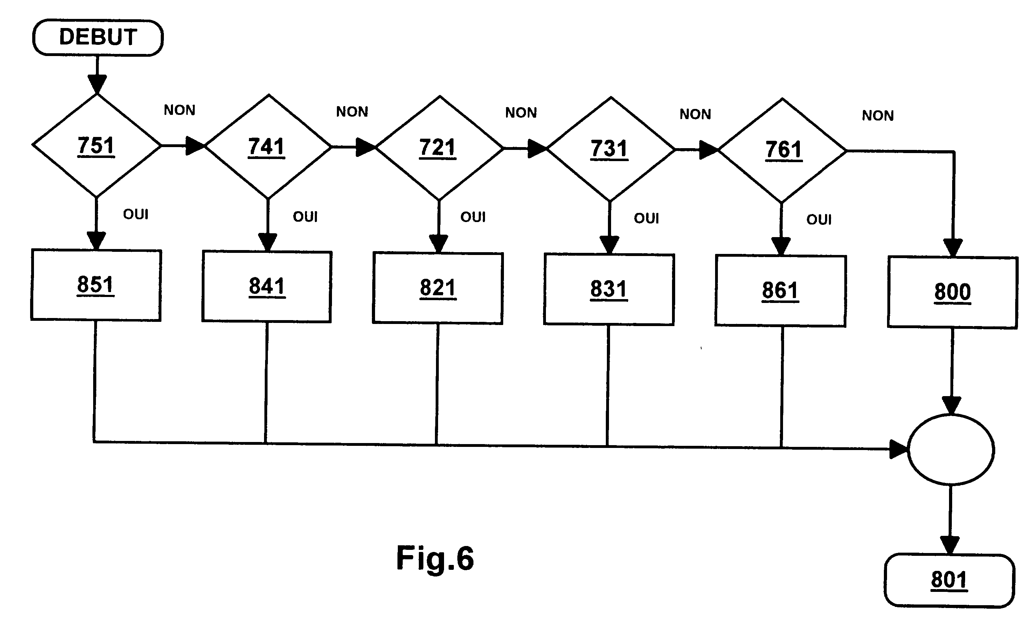

La détection d'une tâche active ou prête se fait comme représenté à la figure 6 par un test respectivement (721 à 761) sur chacun des tampons matériels ou logiciels respectifs (26) du disque dur, (36) d'interface, (46) de télécommunication, (56 et 57) de son, (66 et 67) de la vidéo qui sont associé avec chacun des circuits contrôleurs respectifs (2, 3, 4, 5, 6, 7) de chacun des dispositifs matériels associés à l'unité centrale (1).

Le test (721) permet de voir si les données sont présentes dans le tampon de mémoire d'entrée et sortie du disque, le test (731) permet de voir si des données sont présentes dans les tampons mémoires hardware ou software du dispositif d'interface client, le test (741) permet de voir si des données sont présentes dans les tampons en mémoire software ou hardware du dispositif télécommunication, le test (751) permet de déterminer si des données sont présentes dans le tampon en mémoire hardware ou software pour le sens, le test (761) permet de voir si des données sont présentes dans les tampons mémoires hardware ou software du dispositif vidéo.

Si un ou plusieurs de ces tampons sont remplis de données le superviseur (12) positionne le ou les tampons de statut respectifs (821) pour le disque dur, (831) pour l'interface, (841) pour les télécommunications, (851) pour le son, (861) pour la vidéo correspondant au matériel à un état logique illustratif de l'activité. Dans le cas contraire les tampons de statut du superviseur sont remis à l'étape (800) à une valeur illustrative de l'inactivité.

Le statut d'opération du serveur (9) ou respectivement de l'appareil (8) est maintenu sur disque dur (21) du serveur (9) ou respectivement dans la mémoire auto alimentée de l'appareil (8).

A chaque fois qu'un événement notable est enclenché, le système d'exploitation l'enregistre immédiatement sur la ressource de stockage permanent.

Ainsi, dans l'éventualité où surviendrait une panne électrique ou encore un bris d'équipement, le système sera en mesure de redémarrer exactement au même endroit où il a été interrompu.

Les événements qui engendrent la sauvegarde du statut d'opération sont :
- entrée d'argent (l'ajout de crédits) ;
- l'ajout d'une sélection dans la file d'attente ;
- la fin d'une sélection (changement de la sélection présentement en écoute).

Le fichier est dans un format machine seulement lisible par l'unité et ne prend pas plus de 64 octets.

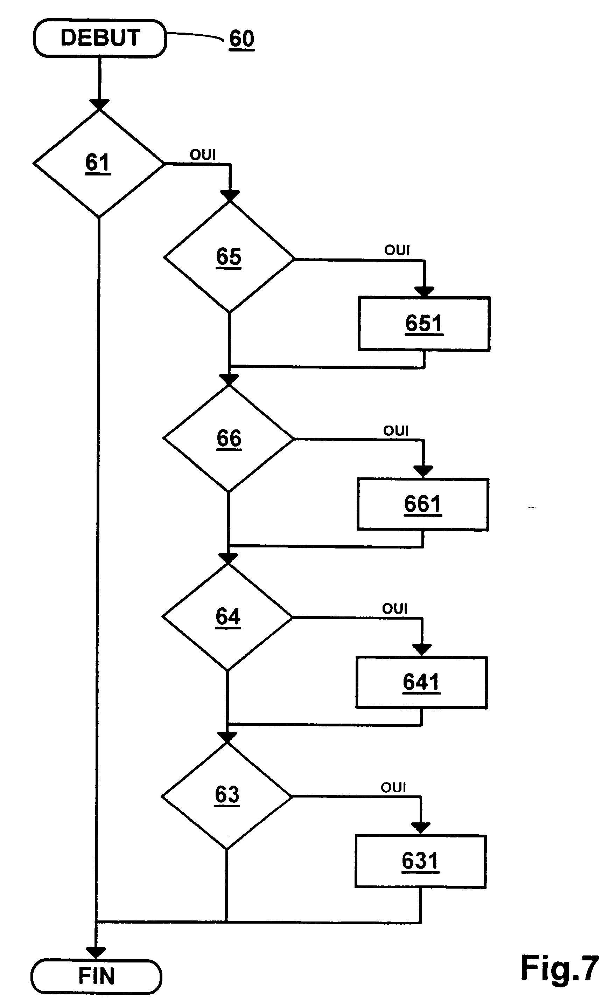

Le nombre et le type de tâches actives est indiqué au superviseur (12) par l'exécution du module de gestion des sélections SPMM dont le logigramme est représenté à la figure 7. La gestion effectuée par ce module commence par un test (61) pour déterminer si des sélections sont en attente dans la file.

Par la suite si le test (61) sur la file d'attente détermine que des sélections sont en attente, quand un client sélectionne un titre qu'il désire entendre, celui-ci est automatiquement écrit dans un fichier de file d'attente du système sur le disque dur.

Ainsi, chaque sélection faite ne sera jamais perdue en cas de panne électrique. Le système joue (reproduit) la sélection en entier avant de la retirer du fichier de la file d'attente.

Quand la sélection a été reproduite en entier, elle est retirée du fichier de file d'attente et est écrite dans le fichier de statistiques avec la date et l'heure d'achat, ainsi que la date et l'heure auxquelles elle a été exécutée.

Immédiatement après le transfert au fichier de statistiques de la sélection terminée, l'appareil vérifie s'il y a d'autres sélection dans le fichier d'attente. S'il y en a une autre, il commence immédiatement à jouer la sélection.

Le traitement se poursuit par un test (65) pour déterminer si la sélection contient un scénario audio. Si oui, ce scénario est inscrit à l'étape (651) dans la file des tâches du superviseur (12). Si non, ou après cette inscription le traitement se poursuit par un test (66) pour déterminer si la sélection contient des images animées. Dans l'affirmative le scénario de la vidéo est inscrit à l'étape (661) dans la file des tâches du superviseur (12). Si non ou dans l'affirmative après cette inscription, le traitement se poursuit par un test (64) pour déterminer si la sélection contient un graphique fixe. Dans l'affirmative le scénario de la présentation graphique est inscrit à l'étape (641) dans la file des tâches du superviseur (12). Si non ou dans l'affirmative après cette inscription le traitement se poursuit par un test (63) pour déterminer si la sélection contient un scénario de publicité. Dans l'affirmative le scénario est inscrit à l'étape (631) dans la file des tâches du superviseur (12). Ainsi le superviseur (12) informé des tâches ouvertes peut gérer le déroulement des tâches simultanément.

Du fait, d'une part du mode de gestion des tâches en affectant des ordres de priorité les plus élevés aux tâches vidéo requérant le plus de ressources, d'autre part de la présence de tampons matériel ou logiciel affecté à chacune des tâches pour mémoriser temporairement des données, de la présence des tampons de statut relatif à chaque tâche et de la communication entre chaque appareil et un serveur par le réseau informatique, il est possible de déporter les ressources onéreuses nécessaires à certaines tâches des appareils (8) sur une seule unité centrale (9) ayant également un système d'exploitation multitâche.

Un serveur (9) de base est en mesure de desservir un réseau local possédant jusqu'à huit juke-boxes clients. Avec des ajouts de périphériques appropriés, tels que des disques durs supplémentaires, un serveur est en mesure de desservir un maximum de 8 juke-boxes additionnels. Pour ajouter plus de juke-boxes, il est possible de créer des environnements réseau local qui possèdent plusieurs serveurs se partageant les tâches. Ainsi il est possible de créer des environnements capables de desservir n'importe quel besoin.

Un serveur complètement équipé possède suffisamment de ressource pour administrer 16 juke-boxes. Un serveur peut supporter jusqu'à 7 disques pouvant contenir autant de sélections que d'espace disponible nécessaire au type de sélection sachant qu'une sélection audio et sa partie graphique nécessitent 3,4125 MBits d'espace disque disponible, qu'une sélection audio et vidéo nécessite 39,568 MBits d'espace disque disponible.

Afin de surpasser ces limitations et de répondre aux besoins d'établissements tels que des complexes hôteliers possédant parfois plusieurs centaines de chambres, il est possible d'utiliser des technologies de stockage en masse tels que des RAID pour sauvegarder les sélections et/ou des configurations de réseau avec multiples serveurs afin de desservir les juke-boxes.

Il est aussi possible d'ajouter des périphériques de télécommunications additionnels (41) tels que des modems afin de répondre aux besoins supplémentaires en télécommunications du réseau vers l'extérieur.

Le réseau permet au serveur d'assumer la responsabilité d'entreprendre plusieurs tâches communes à chaque juke-box afin d'éviter la redondance de travail, d'opérations informatiques et d'équipement.

Le réseau local sert aussi de lien important entre tous les juke-boxes en rendant possible l'établissement de liens permettant de maintenir toutes les données communes à tous les juke-boxes et en les rendant accessibles à chacun.

Les données communes maintenues sur un serveur sont, soit les sélections audio/vidéo, soit les statistiques d'utilisation d'achats de chaque juke-box, soit les statistiques sur les sélections audio/vidéo.

Le juke-box ou appareil audiovisuel (8) d'une part ne possède pas de périphériques de télécommunication puisque ceux-ci sont centralisés au serveur (9) mais il place des requêtes au serveur (9) qui les traite en priorité, et d'autre part ne possède pas l'espace disque requis pour stocker les sélections audio/vidéo, puisque celles-ci sont centralisées au serveur (9) afin d'être partageables avec tous les juke-boxes du réseau local.

Le juke-box (8) réseau a besoin de très peu d'espace de stockage permanent puisque toutes les informations seront maintenant centralisées permettant de produire des unités sans disque dur et réduisant ainsi la maintenance en éliminant les pièces les plus aptes à tomber en panne. Dans le juke-box (8) sans disque dur, une partition mémoire permanente contient toute l'information et le programme d'exploitation nécessaire afin d'établir les liens avec le serveur et de démarrer le système d'exploitation du juke-box.

Cette mémoire permanente peut être sous forme de mémoire EEPROM, des banques de mémoires statiques protégées par piles ou encore des cartes appelées HARD CARD qui sont des banques de mémoire statiques protégées par piles avec des fonctions permettant de cloner les tâches d'un disque rigide.

Le système d'exploitation du module juke-box (8) s'assure d'avoir la ressource nécessaire avant d'effectuer son travail. Pour ce faire, il doit gérer l'état des liens avec les périphériques centralisés et, si nécessaire, fait des requêtes au serveur demandant d'établir des liens appropriés entre le juke-box et le périphérique requis. Si les ressources par exemple télécommunication ne sont pas en exploitation par un juke-box, le serveur (9) accordera les liens exclusifs au juke-box.

Une fois le lien établi, le juke-box (8) peut effectuer son travail comme si la ressource lui était propre. Une fois que le juke-box (8) aura terminé son travail, il envoie une requête au serveur afin d'être déconnecté de la ressource, la rendant ainsi disponible pour les autres juke-boxes (8) du réseau.

L'ordre et la logique utilisé afin d'accorder une distribution et des privilèges d'accès aux ressources ordonnées sont contrôlés par le système d'exploitation de réseau qui réside sur le serveur (9).

Ainsi un dispositif commutateur tel qu'une clé matérielle ou logicielle permet à l'exploitant du réseau de décider de faire diffuser par le serveur (9) la même sélection sur tous les appareils (8) du réseau ou bien de laisser diffuser sur chaque appareil (8) une sélection différente. Dans ce dernier cas, l'accès aux ressources du disque dur se fera e temps partagé entre chaque appareil (8), les tampons (56, 57 ; 66, 67) de chaque appareil (8) ayant la capacité suffisante pour attendre l'accès suivant sans qu'il y ait discontinuité dans la représentation audio ou visuelle.

De plus le système d'exploitation multitâche incluant une librairie contenant un ensemble d'outils et de services, permet de faciliter très significativement l'exploitation du fait de son intégration dans les moyens de mémorisation et de la grande flexibilité ainsi apportée. En particulier, il est, grâce à cela, possible de créer un univers multimédia en gérant de manière simple et efficace simultanément la reproduction de sons, l'affichage d'images ou de graphiques et l'animation vidéo. En outre, puisque les informations audiovisuelles sont numérisées et stockées dans les seuls moyens de mémorisation du serveur, le coût du réseau est considérablement réduit.

De même, le déport du matériel nécessaire à la fonction télécommunication de chaque appareil (8) sur le serveur du réseau réduit considérablement le coût et permet par l'utilisation d'un réseau informatique ayant un débit de 100 MBits/s de servir simultanément au moins huit appareils qui peuvent tous en même temps reproduire un animation vidéo différente sur chacun des appareils, sachant que chaque animation vidéo nécessite un débit de 10 MBits/s.

Ceci n'aurait pas été possible avec le réseau ISDN du brevet WO 94/15416 dont le débit est de l'ordre de 1 MBbit/s, ce qui est déjà insuffisant pour une animation vidéo. Il en est de même avec toute autre ligne de télétransmission de données.

Lorsqu'il est question de tampons, il est rappelé que ceux-ci peuvent être présent soit physiquement sur le circuit auquel ils sont affectés soit réalisé par logiciel en réservant des emplacements de mémorisation dans la mémoire du système.

## Revendications

1. Système de distribution audiovisuelle pour exécuter une pièce audiovisuelle sur au moins un appareil audiovisuel (8) parmi un pluralité d'appareils audiovisuels comportant chacun des moyens audio ou vidéo d'exécution d'une pièce et reliés à un serveur central (9) informatique contenant des moyens (21) à mémoire magnétique ou optique de mémorisation de masse d'une pluralité de pièces audiovisuelles sélectionnables à partir de chacun des appareils, caractérisé en ce que chacun des appareils audiovisuels (8) comportent des moyens (33) interactifs de communication avec l'utilisateur pour sélectionner une pièce ou un menu, des moyens (35) de paiement, une carte (71) réseau informatique, une mémoire permanente à semi-conducteur contenant un système d'exploitation multitâches comportant au moins une tâche de gestion des accès disque dur dans laquelle l'ordre d'exécution d'une pièce résultant d'une sélection est traité d'une part, comme une tâche d'accès séquentiel disque dur et, d'autre part, la carte réseau (71) de l'appareil audiovisuel est déclarée au système d'exploitation comme le périphérique constituant le disque dur de l'appareil, pour permettre à ce dernier d'envoyer à travers le réseau une requête au serveur (9) en vue de son traitement, le serveur comportant un système d'exploitation multitâches, une mémoire (21) de masse permanente de type magnétique ou optique, une carte (71) réseau par laquelle les requêtes du ou des appareils (8) audiovisuels sont reçues, le système d'exploitation du serveur traitant ces requêtes d'accès disque produites par les appareils (8) comme ses propres requêtes d'accès disque.

2. Système de distribution audiovisuelle selon la revendication 1, caractérisé en ce que dans le système d'exploitation de chaque appareil audiovisuel (8) la déclaration du modem de télécommunication appartenant à une tâche d'accès télécommunication en tant que périphérique correspond à celle de la carte réseau et lorsqu'une requête d'accès télécommunication est effectuée au niveau d'un appareil (8) la carte réseau de cet appareil transmet cette requête au serveur (9) pour s'assurer préalablement par une requête que la carte modem du serveur (9) est disponible.

3. Système de distribution audiovisuelle selon la revendication 1 ou 2, caractérisé en ce que le serveur comporte au moins un modem (41) de télécommunication.

4. Système de distribution audiovisuelle selon une des revendications 1 à 3, caractérisé en ce que le débit de chaque carte (71) réseau est supérieur à 10 Mbit/s, et les dimensions des tampons des circuits de commande vidéo (66, 67) et son (56, 57) permettent l'échange des informations avec un débit d'au moins 10 Mbit/s pour réaliser l'animation vidéo sur un réseau contenant au moins huit appareils audiovisuels.

5. Système de distribution audiovisuelle selon une des revendications 1 à 4, caractérisé en ce que chaque appareil audiovisuel comporte un écran tactile (33) et son logiciel d'interface (153) associé comme moyen interactif de communication avec l'utilisateur.

6. Système de distribution audiovisuelle selon l'une des revendications 1 à 5, caractérisé en ce que le réseau comprend un nombre de serveurs (9), associé chacun à un disque dur (21), et un nombre d'appareils audiovisuels (8) tel que le nombre d'appareils audiovisuels (8) est égal à huit fois le nombre de serveurs (9).

7. Système de distribution audiovisuelle selon une des revendications précédentes, caractérisé en ce que le système d'exploitation de chaque serveur (9) est associé avec un moyen de commutation permettant de décider si les informations fournies en réponse à la requête d'un appareil (8) du réseau sont desservies à l'ensemble des appareils du réseau ou à chaque appareil ayant émis une requête.

8. Système de distribution audiovisuelle selon une des revendications 1 à 7, caractérisé en ce que le serveur est équipé de moyens (5, b) d'exécution audio ou vidéo d'une pièce, de moyens (35) de paiement et de moyens interactifs de communication avec un utilisateur ou le gérant du réseau.

9. Système de distribution audiovisuelle selon une des revendications précédentes, caractérisé en ce que le statut d'opération du serveur (9) ou respectivement de l'appareil (8) est maintenu sur le disque dur (21) du serveur ou respectivement dans la mémoire permanente de l'appareil (8).

## Patentansprüche

1. Audiovisuelles Verteilungssystem zur Ausführung eines audiovisuellen Stücks in wenigstens einem audiovisuellen Gerät (8) von mehreren audiovisuellen Geräten, die jeweils Audio-oder Videomittel zur Ausführung eines Stücks enthalten und mit einem zentralen Datenverarbeitungsserver (9) verbunden sind, der magnetische oder optische Speichermittel (21) zur Massenspeicherung mehrerer audiovisueller Stücke enthält, die von jedem der Geräte wählbar sind, dadurch gekennzeichnet, daß jedes der audiovisuellen Geräte (8) interaktive Mittel (33) für die Kommunikation mit dem Anwender für die Wahl eines Stücks oder eines Menüs, Zahlungsmittel (35), eine Datenverarbeitungsnetzkarte (71) und einen Halbleiter-Permanentspeicher enthält, der ein Multitasking-Betriebssystem enthält, das seinerseits wenigstens eine Task zur Steuerung der Zugriffe auf die Festplatte umfaßt, in der einerseits die Reihenfolge der Ausführung eines aus einer Wahl resultierenden Stücks als eine Task für einen sequentiellen Zugriff auf die Festplatte behandelt wird und andererseits die Netzkarte (71) des audiovisuellen Geräts gegenüber dem Betriebssystem als Peripheriegerät erklärt wird, das die Festplatte des Geräts bildet, um diesem letzteren zu ermöglichen, über das Netz eine Anforderung an den Server (9) für seine Verarbeitung zu schicken, wobei der Server ein Multitasking-Betriebssystem, einen magnetischen oder optischen Permanentmassenspeicher (21) und eine Netzkarte (71) enthält, über die die Anforderungen des oder der audiovisuellen Geräte (8) empfangen werden, wobei das Betriebssystem des Servers diese Plattenzugriffsanforderungen, die von den Geräten (8) erzeugt werden, als seine eigenen Plattenzugriffsanforderungen behandelt.

2. Audiovisuelles Verteilungssystem nach Anspruch 1, dadurch gekennzeichnet, daß in dem Betriebssystem jedes audiovisuellen Geräts (8) die Erklärung des einer Telekommunikationszugriffs-Task zugehörigen Telekommunikationsmodems als Peripheriegerät jener der Netzkarte entspricht, wobei die Netzkarte dieses Geräts dann, wenn eine Telekommunikationszugriffsanforderung auf seiten des Geräts (8) erfolgt, diese Anforderung an den Server (9) überträgt, um im voraus durch eine Anforderung sicherzustellen, daß die Modemkarte des Servers (9) verfügbar ist.

3. Audiovisuelles Verteilungssystem nach Anspruch 1 oder 2, dadurch gekennzeichnet, daß der Server wenigstens ein Telekommunikationsmodem (41) enthält.

4. Audiovisuelles Verteilungssystem nach einem der Ansprüche 1 bis 3, dadurch gekennzeichnet, daß der Durchsatz jeder Netzkarte (71) größer als 10 MBit/s ist und die Abmessungen der Videosteuerungs-Pufferschaltungen (66, 67) und Klangsteuerungs-Pufferschaltungen (56, 57) den Austausch von Informationen mit einem Durchsatz von wenigstens 10 MBit/s ermöglichen, um eine Videoanimation in einem Netz zu verwirklichen, das wenigstens acht audiovisuelle Geräte enthält.

5. Audiovisuelles Verteilungssystem nach einem der Ansprüche 1 bis 4, dadurch gekennzeichnet, daß jedes audiovisuelle Gerät einen Tastschirm (33) und dessen Schnittstellensoftware (153), die als Mittel für eine interaktive Kommunikation mit dem Anwender zugeordnet ist, enthält.

6. Audiovisuelles Verteilungssystem nach einem der Ansprüche 1 bis 5, dadurch gekennzeichnet, daß das Netz eine Anzahl von Servern (9), denen jeweils eine Festplatte zugeordnet ist, und eine Anzahl von audiovisuellen Geräten (8) enthält, derart, daß die Anzahl der audiovisuellen Geräte (8) wenigstens gleich der achtfachen Anzahl der Server (9) ist.

7. Audiovisuelles Verteilungssystem nach einem der vorangehenden Ansprüche, dadurch gekennzeichnet, daß dem Betriebssystem jedes Servers (9) ein Mittel zum Ein- und Ausschalten zugeordnet ist, das ermöglicht zu entscheiden, ob die als Antwort auf die Anforderung eines Geräts (8) des Netzes gelieferten Informationen an sämtliche Geräte des Netzes oder an jedes Gerät, das eine Anforderung geschickt hat, geliefert werden.

8. Audiovisuelles Verteilungssystem nach einem der Ansprüche 1 bis 7, dadurch gekennzeichnet, daß der Server mit Mitteln (5, b) für die Audio- oder Videoausführung eines Stücks, mit Zahlungsmitteln (35) und mit interaktiven Kommunikationsmitteln mit einem Anwender oder der Netz-Bedienungsperson ausgerüstet ist.

9. Audiovisuelles Verteilungssystem nach einem der vorangehenden Ansprüche, dadurch gekennzeichnet, daß der Operationsstatus des Servers (9) oder des jeweiligen Geräts (8) auf der Festplatte (21) des Servers bzw. im Permanentspeicher des Geräts (8) gehalten wird.

## Claims

1. Audiovisual distribution system for performing an audiovisual item on at least one piece of audiovisual apparatus (8) from among a plurality of pieces of audiovisual apparatus each comprising audio or video means for performing an item and connected to a central computer server (9) containing magnetic or optical memory means (21) for the mass storage of a plurality of audiovisual items that can be selected from each of the pieces of apparatus, characterised in that each of the pieces of audiovisual apparatus (8) comprises interactive means (33) for communication with the user in order to select an item or a menu, payment means (35), a computer network card (71), a permanent semiconductor memory containing a multitasking operating system comprising at least one hard-disk access management task in which the order to perform an item resulting from a selection is processed on the one hand, as a hard-disk sequential access task and, on the other hand, the network card (71) of the piece of audiovisual apparatus is declared to the operating system as the peripheral constituting the hard disk of the apparatus, to allow the latter to send over the network a request to the server (9) with a view to its processing, the server comprising a multitasking operating system, a permanent mass memory (21) of magnetic or optical type, a network card (71) via which the requests from the piece or pieces of audiovisual apparatus (8) are received, the operating system of the server processing these disk access requests made by the apparatus (8) as its own requests for disk access.

2. Audiovisual distribution system according to Claim 1, characterised in that, in the operating system of each piece of audiovisual apparatus (8) the declaration of the telecommunications modem belonging to a telecommunications access task as a peripheral corresponds to that of the network card and when a telecommunications access request is made on a piece of apparatus (8) the network card of that apparatus transmits the request to the server (9) in order to make sure in advance, by a request, that the modem card of the server (9) is available.

3. Audiovisual distribution system according to Claim 1 or 2, characterised in that the server comprises at least one telecommunications modem (41).

4. Audiovisual distribution system according to one of Claims 1 to 3, characterised in that the speed of each network card (71) is greater than 10 Mbit/s, and the dimensions of the buffers of the video (66, 67) and sound (56, 57) control circuits permit the exchange of information with a speed of at least 10 Mbit/s in order to produce the video animation on a network containing at least eight pieces of audiovisual apparatus.

5. Audiovisual distribution system according to one of Claims 1 to 4, characterised in that each piece of audiovisual apparatus comprises a touch-sensitive screen (33) and its associated interface software (153) as an interactive means of communication with the user.

6. Audiovisual distribution system according to one of Claims 1 to 5, characterised in that the network comprises a number of servers (9), each associated with a hard disk (21), and a number of pieces of audiovisual apparatus (8) such that the number of pieces of audiovisual apparatus (8) is equal to eight times the number of servers (9).

7. Audiovisual distribution system according to one of the preceding claims, characterised in that the operating system of each server (9) is associated with a switching means making it possible to decide whether the information provided in response to the request from a piece of apparatus (8) in the network is provided to all the apparatus in the network or to each piece of apparatus that has sent a request.

8. Audiovisual distribution system according to one of Claims 1 to 7, characterised in that the server is equipped with audio or video means (5, 6) for performing an item, payment means (35) and interactive means for communication with a user or the network manager.

9. Audiovisual distribution system according to one of the preceding claims, characterised in that the operating status of the server (9) or respectively the apparatus (8) is held on the hard disk (21) of the server or respectively in the permanent memory of the apparatus (8).
